# EUROPEAN PATENT SPECIFICATION

(11) **EP 3 728 984 B1**
(45) Date of publication and mention of the grant of the patent: **26.01.2022**
(21) Application number: 17825536.0
(22) Date of filing: 21.12.2017
(51) Int. Cl.: F41G 7/22, G01S 7/495, F41H 11/04, H04K 3/00, F41H 13/00, F42B 4/26

(54) **IRCM SYSTEM BASED ON COORDINATED MANAGEMENT OF FLARES AND DIRCM SYSTEMS FOR PROTECTION AGAINST IR-GUIDED MISSILES**
IRCM-SYSTEM AUF BASIS VON KOORDINIERTER VERWALTUNG VON LEUCHTKUGELN UND DIRCM-SYSTEMEN ZUM SCHUTZ VOR IR-GELEITETEN FLUGKÖRPERN
SYSTÈME IRCM BASÉ SUR LA GESTION COORDONNÉE DE FUSÉES LUMINEUSES ET DU SYSTÈME DIRCM POUR LA PROTECTION CONTRE LES MISSILES GUIDÉS PAR IR

(43) Date of publication of application: 28.10.2020
(73) Proprietor: Elettronica S.p.A., 00131 Roma (IT)
(72) Inventor: USAI, Andrea, 00131 ROMA (IT); TAFUTO, Antonio, 00131 ROMA (IT)
(74) Representative: Sordini, Lorenzo
(86) International application number: PCT/EP2017/084260
(87) International publication number: WO 2019/120555

(56) References cited:
- EP-A1- 2 527 865
- EP-A1- 2 811 315

## Description

### TECHNICAL FIELD OF THE INVENTION

The present invention relates, in general, to the field of Electronic Countermeasures (ECMs) and, in particular, to Infrared Countermeasures (IRCMs).

### BACKGROUND ART

As is known, IRCMs are used to protect platforms, such as land platforms/vehicles, avionic platforms (e.g., aircraft and helicopters) and naval units, from infrared (IR) guided missiles.

Typical IRCM systems are the so-called Directed Infrared Countermeasure (DIRCM) systems (sometimes also referred to as Directional Infrared Countermeasures) and systems employing flares (sometimes also referred to as decoy flares).

In general, a DIRCM system is an active system designed to deceive IR seekers of IR-guided missiles (in particular, the so-called first three generations of IR seekers).

Typically, a DIRCM system is designated to a specific target by a Missile Warning System (MWS), which keeps sending an updated list of detected threats (said list reporting a coarse estimation of a direction of arrival of each detected threat). Once activated, a DIRCM system tries deceiving the IR seeker of an approaching IR-guided missile so as to steer the latter away from its target by means of a narrow laser beam, that is constantly kept on the missile and is modulated according to a predefined jamming code (in general, related to the seeker's generation(s) which the DIRCM system is designed to be effective against).

A DIRCM system typically comprises a tracking unit (or tracker), a laser unit and an electronic control unit, wherein:
- the tracker is operable to track an approaching missile (to this end, the tracker conveniently includes an IR imaging device);
- the laser unit is operable to emit a jamming laser beam towards the approaching missile (typically, an IR laser beam modulated according to a predefined frequency jamming code such that to inject spurious signals into the seeker's IR detector of the approaching missile, thereby deceiving missile's IR seeker thus causing the missile to steer away, from the platform on which said DIRCM system is installed, towards a "fake" target); and
- the electronic control unit is configured to control operation of the whole DIRCM system and communicate with an on-board command and control system of the platform.

More in detail, the tracker is typically configured to:
- start tracking a (potential) threat signaled by an on-board MWS of the platform;
- checking whether the signaled threat is an actual approaching missile; and,
- if the signaled threat is an actual approaching missile, activate the laser unit and keep it constantly pointed at the approaching missile so as to keep said approaching missile constantly under the illumination of the jamming laser beam.

Typically, the tracker and the laser unit are integrated into a steerable turret, which is operable by the tracker to achieve the requested pointing. Nowadays, typical DIRCM installations are based on single turret configurations or on multiple turret configurations (e.g., in case of large platforms), wherein this latter configuration type is used to extend the countermeasure field of regard (FOR) all around the installation platform.

Single turret DIRCM configurations may lead to have large blind zones around the installation platform where approaching threats are not countered at all. In fact, the FOR of a single turret DIRCM system does not depend only on the DIRCM system itself, but also on the installation platform, which always masks several portions of the theoretically-achievable coverage area, even when considering the most extended possible FOR for the single turret DIRCM system. Moreover, single turret DIRCM configurations are limited to protecting a platform against one threat at a time.

In order to overcome FOR-related limitations of single turret DIRCM configurations, multiple turret DIRCM configurations can be used. In particular, this configuration type is exploited to reduce blind zones around large platforms.

An example of known multiple-turret DIRCM system is provided in EP 3 081 895 A1. In particular, said multiple-turret DIRCM system includes a plurality of DIRCM subsystems, that are operable to track and jam IR-guided missiles and comprise a first DIRCM subsystem (including respective tracking and laser means) and a second DIRCM subsystem (including respective tracking and laser means) installed on a platform to be protected against IR-guided missiles. The first DIRCM subsystem is operable to track and jam IR-guided missiles in a first coverage region. The second DIRCM subsystem is operable to track and jam IR-guided missiles in a second coverage region. Both said first and second DIRCM subsystems are operable to track and jam IR-guided missiles in an overlap region, which includes a first handover sub-region adjacent to the first coverage region and a second handover sub-region adjacent to the second coverage region.

The multiple-turret DIRCM system according to EP 3 081 895 A1 further includes a managing unit, that is coupled to a MWS installed on the platform to receive threat-related data indicating a threat scenario, and is configured to coordinate activation and operation of the DIRCM subsystems on the basis of the received threat-related data.

Moreover, the method of operation of the multiple-turret DIRCM system according to EP 3 081 895 A1 comprises:
- if a given missile is in the first coverage region, carrying out a first tracking and jamming operation including tracking and jamming said given missile by the first DIRCM subsystem;
- if the given missile moves from the first coverage region to the overlap region, carrying out a first overlap operation including
   - keeping carrying out the first tracking and jamming operation, and
   - starting tracking said given missile also by the second DIRCM subsystem; and,
- if the given missile in the overlap region enters the second handover sub-region, carrying out a first handover operation including
   - keeping tracking said given missile by the second DIRCM subsystem,
   - starting jamming said given missile by said second DIRCM subsystem, and
   - stopping carrying out the first tracking and jamming operation.

More in general, EP 3 081 895 A1 teaches to appropriately coordinate operation of several DIRCM turrets (each including a respective tracker and a respective laser unit) to be effective against more than one threat simultaneously. Moreover, EP 3 081 895 A1 teaches also how to effectively manage threat handover among different DIRCM turrets still guaranteeing jamming code reproduction continuity on target and avoiding destructive interference among laser beams of different turrets during jamming.

In order for a DIRCM system to be effective, the following (general) requirements should be met:
- the DIRCM system should ensure protection against IR-guided missile threats from any direction of arrival;
- upon reception of an alarm from the MWS, the DIRCM system shall ensure the minimum time to get its laser onto the target;
- during jamming, the DIRCM system shall ensure that its laser is on target during the whole jamming code replication in order to allow all the jamming code frequencies to reach the engaged IR seeker.

Nowadays, no existing DIRCM system is able to effectively deceive missile IR seekers of the latest generation (namely, fourth generation and beyond). In fact, state-of-the-art IR seekers are designed to implement ECMs based on IR image processing such that to defeat traditional DIRCMs.

As previously said, flares are another type of IRCMs installed on board land platforms/vehicles, avionic platforms and naval units, and used to deceive IR seekers of IR-guided missiles. In particular, nowadays there exist several types of flares, each characterized by a specific technology, designed to decoy IR-guided missiles and to thwart ECM systems which missile IR guidance systems are equipped with. Typically, flares are deployed/launched (for example, by means of a flare dispenser) according to predefined flare deployment/launch sequences programmed before a mission.

Nowadays, even no existing flare-based IRCM system is able to effectively deceive missile IR seekers of the latest generation (i.e., fourth generation and beyond). In fact, the state-of-the-art IR seekers are designed to implement ECMs based on IR image processing such that to defeat also traditional flare-based IRCMs.

### OBJECT AND SUMMARY OF THE INVENTION

A general object of the present invention is that of overcoming, at least in part, the above drawbacks of the current IRCM systems.

In particular, a specific object of the present invention is that of providing an improved IRCM system such that to be effective against missile IR seekers of the latest generation (i.e., fourth generation and beyond) designed to implement ECMs based on IR image processing.

These and other objects are achieved by the present invention in that it relates to an IRCM system and a related method of operation, as defined in the appended claims.

In particular, the present invention concerns an IRCM system designed to be installed on a platform for protection against IR-guided missiles and to be connected to a MWS installed on said platform, wherein said MWS is configured to detect approaching IR-guided missiles.

The IRCM system according to the present invention comprises:
- a DIRCM system operable to track and jam approaching IR-guided missiles;
- a flare deployment/launch apparatus operable to deploy/launch flares; and
- a self-protection suite manager configured to
   - store one or more DIRCM-flare coordination libraries indicative of a predefined policy of coordination of flare deployment/launch with operation of the DIRCM system,
   - operate the DIRCM system to track and jam an approaching IR-guided missile detected by the MWS and,
   - when the DIRCM system is tracking and jamming an approaching IR-guided missile, operate also the flare deployment/launch apparatus to deploy/launch flares based on the stored DIRCM-flare coordination library(ies).

According to the invention, the self-protection suite manager is configured to, when the DIRCM system is tracking and jamming an approaching IR-guided missile, operate also the flare deployment/launch apparatus to deploy/launch flares at one or more given times and according to one or more predefined flare deployment/launch sequences; wherein said given time(s) is/are determined by the self-protection suite manager based on, and said predefined flare deployment/launch sequence(s) is/are indicated in, the stored DIRCM-flare coordination library(ies).

According to the invention, the self-protection suite manager is configured to:
- receive, from the MWS, messages related to IR-guided missiles detected by said MWS, wherein said messages related to detected IR-guided missiles include
   - pre-alarm messages signaling potential approaching IR-guided missiles,
   - pre-alarm update messages indicative of updates on potential approaching IR-guided missiles previously signaled,
   - alarm confirmation messages confirming actual approaching IR-guided missiles, and
   - alarm update messages indicative of updates on actual approaching IR-guided missiles;
- receive, from the DIRCM system, tracking update messages indicative of updates on approaching IR-guided missiles tracked and jammed by said DIRCM system;
- in response to a pre-alarm message received from the MWS and indicative of a potential approaching IR-guided missile, operate the DIRCM system to track and jam said potential approaching infrared-guided missile;
- carry out a scenario analysis based on
   - the pre-alarm message and pre-alarm update messages received from the MWS and related to said potential approaching infrared-guided missile, and
   - tracking update messages received from the DIRCM system and related to said potential approaching IR-guided missile tracked and jammed by said DIRCM system;
- in response to an alarm confirmation message received from the MWS and confirming that said potential approaching IR-guided missile is an actual approaching IR-guided missile, operate also the flare deployment/launch apparatus to deploy/launch flares based on
   - the stored DIRCM-flare coordination library(ies) and
   - the scenario analysis carried out;
- inform the DIRCM system of flare deployment/launch, whereby said DIRCM system disregards flares' glares during tracking thereby keeping tracking and jamming the actual approaching IR-guided missile; and,
- for a predefined blanking period after flare deployment/launch, keep carrying out the scenario analysis only based on tracking update messages received from the DIRCM system and related to the actual approaching IR-guided missile tracked and jammed by said DIRCM system, while disregarding messages received from the MWS and related to IR-guided missile(s) detected by said MWS in a given space sector where the actual approaching IR-guided missile is located.

According to the invention, said predefined blanking period and said given space sector are indicated in the stored DIRCM-flare coordination library(ies).

### BRIEF DESCRIPTION OF THE DRAWINGS

For a better understanding of the present invention, preferred embodiments, which are intended purely by way of example and are not to be construed as limiting, will now be described with reference to the attached drawings (not to scale), where:
- Figure 1 schematically illustrates an IRCM system according to a preferred embodiment of the present invention;
- Figures 2-5 show an example of operating scenario in which the IRCM system of Figure 1 is operated against an approaching IR-guided missile;
- Figure 6 schematically illustrates an example of DIRCM-flare coordination timeline related to the operating scenario shown in Figures 2-5; and
- Figure 7 shows an example of DIRCM-flare coordination library exploitable by the IRCM system of Figure 1.

### DETAILED DESCRIPTION OF PREFERRED EMBODIMENTS OF THE INVENTION

The following discussion is presented to enable a person skilled in the art to make and use the invention. Various modifications to the embodiments will be readily apparent to those skilled in the art, without departing from the scope of the present invention as claimed. Thus, the present invention is not intended to be limited to the embodiments shown and described, but is to be accorded the widest scope consistent with the principles and features disclosed herein and defined in the appended claims.

As previously explained, DIRCM systems and flares have demonstrated their effectiveness against missile IR guidance systems of the first, second and third generations, while nowadays there are no IRCM system able to ensure a sufficiently high success rate against more advanced systems based on IR imaging processing.

The present invention stems from Applicant's idea of using DIRCMs and flares in a coordinating and cooperative way so as to defeat missile IR seekers of the latest generation (i.e., fourth generation and beyond) based on IR image processing.

In the following, only for the sake of description simplicity and, thence, without losing generality, a preferred embodiment of the present invention will be described in detail by making explicit reference to an IRCM system installed on board an aircraft and comprising only one DIRCM turret and only one flare dispenser. Anyway, it is important to stress the point that the present invention can be advantageously exploited, without any substantial modification, with any number N of DIRCM turrets (with N positive integer), with any number M (with M positive integer) of flare apparatus/systems/devices for deploying and/or launching flares, and on board platforms of any type, such as:
- land platforms or vehicles, conveniently of the military type (e.g., armored military vehicles, tanks, mine-clearance vehicles, armed land vehicles, etc.);
- avionic platforms, conveniently of the military type (e.g., aircrafts, helicopters, drones, etc.); and
- naval units, conveniently of the military type (e.g., cruisers, patrol boats, corvettes, etc.).

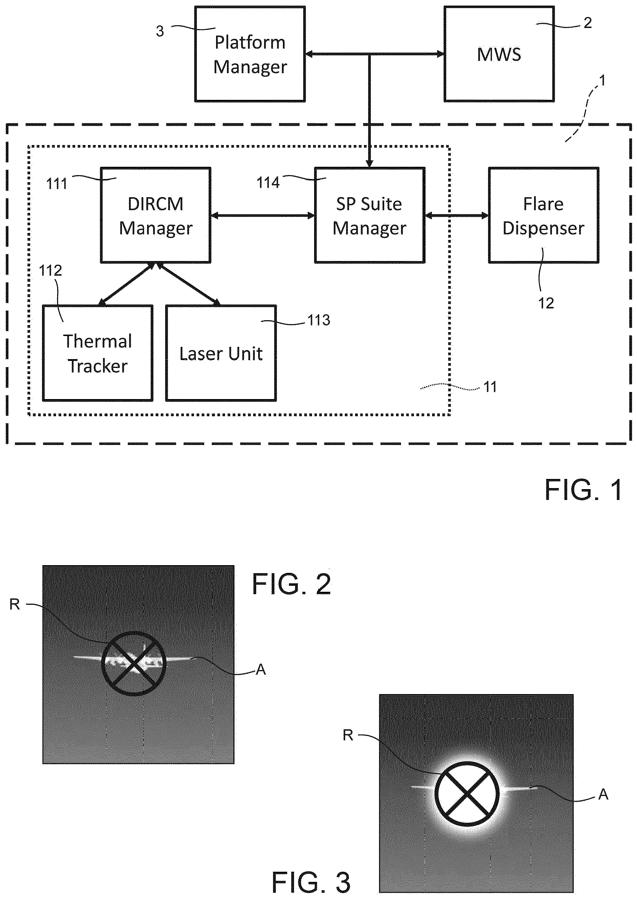

For a better understanding of the present invention, Figure 1 shows a block diagram schematically representing a functional architecture of an IRCM system (denoted as a whole by 1) according to a preferred embodiment of the present invention.

In particular, the IRCM system 1 is installed on board an aircraft (not shown in Figure 1) and comprises:
- a DIRCM system 11, that includes a DIRCM manager 111, a thermal tracker 112, a laser unit 113, and a self-protection (SP) suite manager 114 connected to a Missile Warning System (MWS) 2 and a platform manager 3 (both installed on board the aircraft); and
- a flare dispenser 12.

In detail, the platform manager 3 is configured to coordinate operation of different systems installed on board the aircraft including the IRCM system 1. The MWS 2 is configured to detect approaching missile threats and estimate direction of arrival of each detected threat. The DIRCM manager 111 is configured to control operation of the thermal tracker 112 and of the laser unit 113. The laser unit 113 is operable to generate jamming laser beams for implementing IRCMs. The thermal tracker 112 (which conveniently includes a respective IR imaging device) is operable to track threats detected by the MWS 2 by constantly keeping the laser unit 113 aimed at the tracked threats for jamming IR guidance systems thereof. The SP suite manager 114 is configured to control operation of the whole IRCM system 1 (i.e., of both the DIRCM system 11 and the flare dispenser 12). Said flare dispenser 12 is operable to deploy flares in response to specific commands from the SP suite manager 114 and according to predefined (i.e., pre-programmed) flare deployment sequences.

More in detail, the SP suite manager 114 is configured to:
- store one or more DIRCM-flare coordination libraries indicative of a predefined policy for flare deployment coordinated with operation of the DIRCM system 11 (e.g., said predefined policy may conveniently include information items indicative of predefined flare deployment times and predefined flare deployment sequences to be used in coordination with the jamming action of the DIRCM system 11);
- in response to an IR-guided missile threat detected by the MWS 2, operate the DICRM system 11 against said IR-guided missile threat, whereby the thermal tracker 112 tracks, and the laser unit 113 jams, said IR-guided missile threat;
- when the DICRM system 11 is operated, operate also the flare dispenser 12 based on the stored DIRCM-flare coordination library/ies (i.e., based on the predefined policy for flare deployment coordinated with operation of the DIRCM system 11).

For a better understanding of the operation of the IRCM system 1, Figures 2, 3, 4 and 5 show an example of operating scenario in which said IRCM system 1 is operated against the IR guidance system of an approaching IR-guided missile.

In particular, Figures 2-5 illustrate an operating scenario, wherein an aircraft A (which the IRCM system 1 is installed on board) is engaged by an approaching IR-guided missile, "from the point of view" of the IR guidance system of said approaching IR-guided missile (in fact, in Figures 2-5 a sort of aiming reticle R is shown, which represents pointing of the IR seeker of the approaching IR-guided missile).

More in detail:
- Figure 2 shows IR signature of the aircraft A as "seen" by the IR seeker of the approaching IR-guided missile, wherein seeker's tracker is locked on the aircraft A;
- Figure 3 shows the DIRCM system 11 operated to de-characterize the IR signature of the aircraft A under attack by dazzling the seeker's tracker (which, anyway, is still locked on the aircraft A; more specifically, on the laser beam emitted by the laser unit 113);

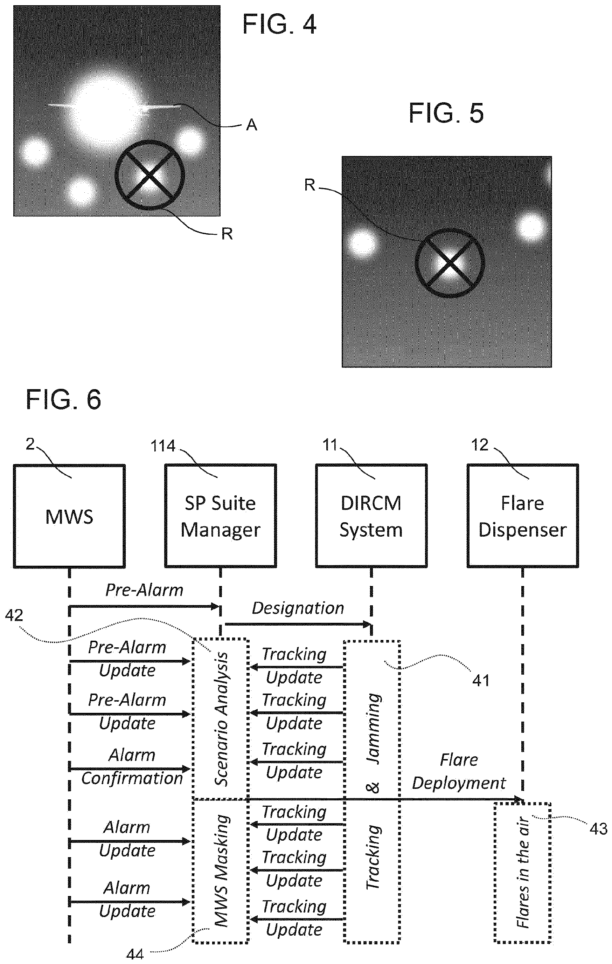

- Figure 4 shows deployment of flares in combination with operation of the DIRCM system 11 (i.e., while the thermal tracker 112 is still tracking, and the laser unit 113 is still jamming, the approaching IR-guided missile); in particular, Figure 4 shows that, due to the combined action of the DIRCM system 11 and the deployed flares, the seeker's tracker moves to the most reliable target (i.e., the glare of a flare), while the laser unit 113 is still on; and
- Figure 5 shows the seeker's tracker successfully steered away from the aircraft A due to angular separation between said aircraft A and flares.

Moreover, Figure 6 schematically illustrates an example of DIRCM-flare coordination timeline related to the operating scenario shown in Figures 2-5. In particular, as shown in Figure 6, the SP suite manager 114 is preferably configured also to:
- receive from the MWS 2 messages related to IR-guided missile threats detected by said MWS 2, wherein said messages related to detected IR-guided missile threats specifically include
   - pre-alarm messages signaling potential approaching IR-guided missiles and respective directions of arrival,
   - pre-alarm update messages indicative of updates on potential approaching IR-guided missiles previously signaled,
   - alarm confirmation messages confirming actual approaching IR-guided missiles, and
   - alarm update messages indicative of updates on actual approaching IR-guided missiles;
- receive, from the DIRCM system 11 (in particular, from the thermal tracker 112 through the DIRCM manager 111), tracking update messages indicative of updates on IR-guided missiles tracked by said thermal tracker 112;
- in response to a pre-alarm message received from the MWS 2 and indicative of a potential approaching IR-guided missile and of its direction of arrival, operate the DIRCM system 11 (in particular the DIRCM manager 111) to cause the thermal tracker 112 to track, and the laser unit 113 to jam, said potential approaching IR-guided missile (block 41 named *"Tracking* & *Jamming"* in Figure 6);
- carry out a scenario analysis (block 42 named *"Scenario Analysis"* in Figure 6) based on
   - the pre-alarm message and pre-alarm update messages received from the MWS 2 and related to said potential approaching IR-guided missile, and
   - tracking update messages received from the DIRCM system 11 (in particular, from the thermal tracker 112 through the DIRCM manager 111) and related to said potential approaching IR-guided missile tracked by said thermal tracker 112;
- in response to an alarm confirmation message received from the MWS 2 and confirming that said potential approaching IR-guided missile is an actual approaching IR-guided missile, operate also the flare dispenser 12 to deploy flares (block 43 named "*Flares in the air*" in Figure 6) based on
   - the stored DIRCM-flare coordination library/ies and
   - the scenario analysis carried out;
- inform the DIRCM system 11 (in particular, the thermal tracker 112 through the DIRCM manager 111) of flare deployment, whereby the thermal tracker 112 takes into account said flare deployment in its IR image processing to filter out flares' glares during tracking, whereby said thermal tracker 112 keeps effectively tracking, and the laser unit 113 keeps effectively jamming, the actual approaching IR-guided missile (again block 41 named *"Tracking* & *Jamming"* in Figure 6); and,
- for a predefined blanking period after flare deployment (block 44 named "*MWS Masking"* in Figure 6), keep carrying out the scenario analysis only based on tracking update messages received from the DIRCM system 11 (in particular, from the thermal tracker 112 through the DIRCM manager 111) and related to the actual approaching IR-guided missile tracked by the thermal tracker 112, while disregarding messages received from the MWS 2 and related to IR-guided missile threats detected by said MWS 2 in a given space sector where the actual approaching IR-guided missile is located.

Conveniently, the stored DIRCM-flare coordination library/ies is/are also indicative of (i.e., the stored policy for flare deployment coordinated with operation of the DIRCM system 11 may conveniently include also information items indicative of) said predefined blanking period and said given space sector.

More in detail, as shown in Figure 6 and as previously explained, once a pre-alarm message is received from the MWS 2, the SP suite manager 114 designates (i.e., activates) the DIRCM system 11, than starts receiving pre-alarm update messages from the MWS 2 and tracking update messages from the DIRCM system 11, and carries out the scenario analysis based on said messages received from said MWS 2 and DIRCM system 11 (block 42 named *"Scenario Analysis"* in Figure 6).

In this respect, it is worth noting that the DIRCM system 11 is used as primary countermeasure system. In fact, it is designated on a threat not yet confirmed by the MWS 2 to ensure a prompt intervention against said threat (even if only potential). The reason is that a DICRM system may tolerate a higher number of false alarms than flares. Therefore, it is possible to relax false-alarm-related requirements applied to the MWS 2, thereby gaining in terms of contrast speed of the DIRCM system 11.

The scenario analysis and the stored DIRCM-flare coordination library/ies allow deciding whether, when and which flare sequence is to be deployed, depending on input data received from the MWS 2 and the DIRCM system 11.

Additionally, it is worth also noting that, once flares are deployed (block 43 named *"Flares in the air"* in Figure 6), the SP suite manager 114 performs a blanking of the alarm update messages received from the MWS 2 (block 44 named *"MWS Masking"* in Figure 6) in order to avoid interference in tracking performed by the DIRCM system 11 (in particular, by the thermal tracker 112) due to false alarms generated by the MWS 2 because of flare deployment. In fact, the MWS 2 may be dazzled by the deployed flares that, hence, may cause the MWS 2 to detect fake targets in, and hence to produce false alarms for, the space sector where the approaching missile and the deployed flares are located.

On the contrary, since the thermal tracked 112 is informed by the SP suite manager 114 of the flare deployment, said thermal tracker 112 is able to detect and, hence, filter out flares' glares, whereby said thermal tracker 112 keeps effectively tracking, and the laser unit 113 keeps effectively jamming, the actual approaching IR-guided missile and, hence, the SP suite manager 114 can still rely on the tracking update messages from the thermal tracker 112 to keep performing the scenario analysis.

Conveniently, the stored DIRCM-flare coordination library/ies is/are also indicative of (i.e., the stored policy for flare deployment coordinated with operation of the DIRCM system 11 may conveniently include also information items indicative of):
- which flare dispenser(s) is/are to be used for contrasting threats;
- flare deployment time(s), for example in terms of delay(s) from the first threat detection by the MWS 2;
- and flare deployment sequence(s).

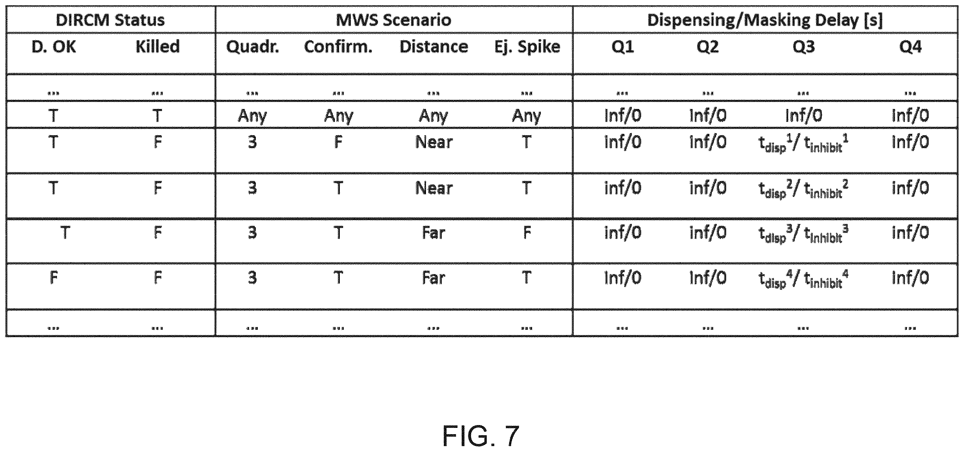

Conveniently, the DIRCM-flare coordination library/ies may be filled in (and then stored on a memory of the SP suite manager 114) by an electronic warfare operator before a mission. In this respect, Figure 7 shows an example of DIRCM-flare coordination library storable on, and exploitable by, the SP suite manager 114. In particular, the DIRCM-flare coordination library shown in Figure 7 conveniently include fields grouped into three main categories, namely *"DIRCM Status", "MWS Scenario"* and *"Dispensing*/*Masking Delay".*

In detail, as far as *"DIRCM Status"* is concerned,
- *"D. OK"* (i.e., Designation OK) indicates whether a threat has been correctly engaged by the DIRCM system 11; this field takes into account whether a threat is in a blind zone of the DIRCM system 11 or whether said DIRCM system 11 is affected by a failure/malfunction;
- *"Killed",* if/when available, indicates threat kill assessment status determined by the DIRCM system 11.

Moreover, as far as *"MWS Scenario"* is concerned,
- *"Quadr."* (i.e., Quadrant) indicates the quadrant where a threat is located;
- *"Confirm."* (i.e., Confirmation) indicates whether a threat has been confirmed by the MWS 2;
- *"Distance"* indicates threat's distance determined by the MWS 2 (conveniently, values usable for this field may be *"Far"* and *"Near");*
- *"Ej. Spike"* (i.e., Ejection Spike) indicates whether initial boost of a missile has been detected by the MWS 2.

Additionally, as far as *"Dispensing*/*Masking Delay"* is concerned, the fields grouped under this category indicate delays for flare deployment with respect to the first threat detection by the MWS 2, and blanking periods after flare deployment, for four quadrants into which the coverage region of the ICRM system 1 is divided. In particular, *"inf"* denotes an infinite time and, hence, means that no flares are deployed by the specific flare dispenser concerned.

Finally, it is important to note that in the example of DIRCM-flare coordination library shown in Figure 7 there are, as for the *"Dispensing*/*Masking Delay",* as many dispensing columns as the space sectors (i.e., quadrants) considered, namely four. Anyway, more in general, different dispensing lines/columns in a DIRCM-flare coordination library may conveniently relate to different pre-programmed flare deployment sequences.

Preferably, the SP suite manager 114 is a software-implemented function, which is conveniently implemented inside the DIRCM system 11 in order to ensure the best performance in terms of reaction speed with respect to changes in IR scenario. Anyway, it is worth noting that it is not necessary that the SP suite manager 114 is implemented in the DIRCM system 11. In fact, more in general, the SP suite manager 114 may be conveniently implemented by an electronic control and processing unit that belongs to the DIRCM system 11 (as shown in Figure 1), or that is external thereto and is connected to the DIRCM manager 111 and the MWS 2 by means of one or more direct, high-data-rate connections (in view of the very short reaction times typically required for engaging IR-guided missiles). In the first case (i.e., with the SP suite manager 114 directly integrated into the DIRCM system 11), a single electronic control and processing unit might be conveniently used to implement both the DIRCM manager 111 and the SP suite manager 114. Anyway, it is important to stress the pint that the SP suite manager 114 is in charge of managing the whole IRCM system 1, while the platform manager 3 has only a supervision duty.

Conveniently, the thermal tracker 112 and the laser unit 113 are integrated into one and the same steerable DIRCM turret. Moreover, the above functions of the DIRCM manager 111 may be conveniently implemented by an electronic control and processing unit (that, as previously said, may conveniently implement also the SP suite manager 114 or not) that is integrated into said steerable DIRCM turret or installed in another position on the aircraft A.

As previously explained, an IRCM system according to the present invention may conveniently include a plurality of DIRCM turrets, each operable to track and jam IR-guided missiles in a respective coverage region. In this case, the SP suite manager is conveniently configured to implement:
- the DIRCM-flare coordination technique according to the present invention in combination with
- the method of operation of the multiple-turret DIRCM system according to EP 3 081 895 A1 (thereby appropriately coordinating operation of the different DIRCM turrets so as to be effective against several simultaneous threats, effectively managing threat handover among the different DIRCM turrets still ensuring jamming code reproduction continuity on target and avoiding destructive interference among laser beams of different DIRCM turrets during jamming).

Additionally, again as previously explained, an IRCM system according to the present invention may conveniently include also a plurality of equipment/devices/systems for deploying and/or launching flares (even based on different flare deployment/launch technologies). For example, an IRCM system according to the present invention might conveniently comprise a plurality of DIRCM turrets, each associated with one or more respective flare deployment/launch equipment/devices/systems.

From the foregoing, innovative features and technical advantages of the present invention are immediately clear to those skilled in the art.

In particular, it is worth highlighting the fact that the present invention allows enhancing effectiveness and robustness of protection against IR-guided missile threats by means of an appropriate DIRCM-flare coordination.

More specifically, the present invention is effective against:
- the missile IR seekers of the first, second and third generations based on signal processing, and
- also the missile IR seekers of the latest generation (i.e., fourth generation and beyond) based on IR image processing (against which current solutions are ineffective).

Moreover, the present invention further allows appropriately coordinating DIRCMs and flares by avoiding mutual interference between IRCMs and MWS and also between DIRCMs and flares.

In summary, the present invention allows:
- implementing coordinated IRCMs based on cooperation and coordination of DIRCMs and flares so as to successfully contrast missile IR guidance systems, even the state-of-the-art ones;
- minimizing mutual interference between DIRCMs and flares and also between MWS and IRCMs (in particular flares); and
- deploying/launching flares in case of
   - ineffectiveness of the jamming code used for DIRCMs, and/or
   - impossibility of intervention of the DIRCM system (for example, due to the presence of threats in blind zones of the DIRCM system, or to malfunction/failure thereof).

Finally, as previously explained, the IRCM system according to the present invention can be advantageously installed on board any type of land platform/vehicle, avionic platform and naval unit.

## Claims

1. Infrared countermeasure system (1) designed to be installed on a platform (A) for protection against infrared-guided missiles and to be connected to a missile warning system (2) installed on said platform (A), wherein said missile warning system (2) is configured to detect approaching infrared-guided missiles; said infrared countermeasure system (1) comprising a directed infrared countermeasure system (11), a flare deployment/launch apparatus (12) and a self-protection suite manager (114);
wherein the directed infrared countermeasure system (11) is operable to track and jam approaching infrared-guided missiles, the flare deployment/launch apparatus (12) is operable to deploy/launch flares, and the self-protection suite manager (114) is configured to:
• operate
- the directed infrared countermeasure system (11) to track and jam approaching infrared-guided missiles detected by the missile warning system (2) and
- the flare deployment/launch apparatus (12) to deploy/launch flares;
• receive, from the missile warning system (2), messages related to infrared-guided missiles detected by said missile warning system (2), wherein said messages related to detected infrared-guided missiles include
- pre-alarm messages signaling potential approaching infrared-guided missiles,
- pre-alarm update messages indicative of updates on potential approaching infrared-guided missiles previously signaled,
- alarm confirmation messages confirming actual approaching infrared-guided missiles, and
- alarm update messages indicative of updates on actual approaching infrared-guided missiles;
• receive, from the directed infrared countermeasure system (11), tracking update messages indicative of updates on approaching infrared-guided missiles tracked and jammed by said directed infrared countermeasure system (11);
• in response to a pre-alarm message received from the missile warning system (2) and indicative of a potential approaching infrared-guided missile, operate the directed infrared countermeasure system (11) to track and jam said potential approaching infrared-guided missile; and
• carry out a scenario analysis based on
- the pre-alarm message and pre-alarm update messages received from the missile warning system (2) and related to said potential approaching infrared-guided missile, and
- tracking update messages received from the directed infrared countermeasure system (11) and related to said potential approaching infrared-guided missile tracked and jammed by said directed infrared countermeasure system (11);
**characterized in that** the self-protection suite manager (114) is further configured to:
• store one or more DIRCM-flare coordination libraries indicative of a predefined policy of coordination of flare deployment/launch with operation of the directed infrared countermeasure system (11);
• in response to an alarm confirmation message received from the missile warning system (2) and confirming that a potential approaching infrared-guided missile is an actual approaching infrared-guided missile, operate also the flare deployment/launch apparatus (12) to deploy/launch flares at one or more given times and according to one or more predefined flare deployment/launch sequences, based on the one or more stored DIRCM-flare coordination libraries and the scenario analysis carried out;
• inform the directed infrared countermeasure system (11) of flare deployment/launch, whereby said directed infrared countermeasure system (11) disregards flares' glares during tracking thereby keeping tracking and jamming the actual approaching infrared-guided missile; and,
• for a predefined blanking period after flare deployment/launch, keep carrying out the scenario analysis only based on tracking update messages received from the directed infrared countermeasure system (11) and related to the actual approaching infrared-guided missile tracked and jammed by said directed infrared countermeasure system (11), while disregarding messages received from the missile warning system (2) and related to one or more infrared-guided missiles detected by said missile warning system (2) in a given space sector where the actual approaching infrared-guided missile is located;
wherein the self-protection suite manager (114) is configured to determine the one or more given times based on the stored DIRCM-flare coordination libraries ;
and wherein the one or more predefined flare deployment/launch sequences , the predefined blanking period and the given space sector are indicated in the one or more stored DIRCM-flare coordination libraries.

2. The infrared countermeasure system of claim 1, wherein the directed infrared countermeasure system includes a plurality of directed infrared countermeasure steerable turrets, each operable to track and jam infrared-guided missiles in a respective coverage region; and wherein the self-protection suite manager (114) is configured to coordinate operation of said directed infrared countermeasure steerable turrets.

3. The infrared countermeasure system according to claim 1 or 2, comprising a plurality of flare deployment/launch apparatuses.

4. Method of operation of an infrared countermeasure system (1) installed on a platform (A) for protection against infrared-guided missiles, wherein said infrared countermeasure system (1) is connected to a missile warning system (2) that is installed on the platform (A) and that is configured to detect approaching infrared-guided missiles; said infrared countermeasure system (1) comprising:
• a directed infrared countermeasure system (11) operable to track and jam approaching infrared-guided missiles;
• a flare deployment/launch apparatus (12) operable to deploy/launch flares; and
• a self-protection suite manager (114);
the method comprising carrying out the following operations by means of the self-protection suite manager (114) :
• operating
- the directed infrared countermeasure system (11) to track and jam approaching infrared-guided missiles detected by the missile warning system (2) and
- the flare deployment/launch apparatus (12) to deploy/launch flares;
• receiving, from the missile warning system (2), messages related to infrared-guided missiles detected by said missile warning system (2), wherein said messages related to detected infrared-guided missiles include
- pre-alarm messages signaling potential approaching infrared-guided missiles,
- pre-alarm update messages indicative of updates on potential approaching infrared-guided missiles previously signaled,
- alarm confirmation messages confirming actual approaching infrared-guided missiles, and
- alarm update messages indicative of updates on actual approaching infrared-guided missiles;
• receiving, from the directed infrared countermeasure system (11), tracking update messages indicative of updates on approaching infrared-guided missiles tracked and jammed by said directed infrared countermeasure system (11);
• in response to a pre-alarm message received from the missile warning system (2) and indicative of a potential approaching infrared-guided missile, operating the directed infrared countermeasure system (11) to track and jam said potential approaching infrared-guided missile; and
• carrying out a scenario analysis based on
- the pre-alarm message and pre-alarm update messages received from the missile warning system (2) and related to said potential approaching infrared-guided missile, and
- tracking update messages received from the directed infrared countermeasure system (11) and related to said potential approaching infrared-guided missile tracked and jammed by said directed infrared countermeasure system (11);
**characterized in that** the self-protection suite manager (114) stores one or more DIRCM-flare coordination libraries indicative of a predefined policy of coordination of flare deployment/launch with operation of the directed infrared countermeasure system (11);
wherein the method further comprises carrying out also the following operations by means of the self-protection suite manager (114):
• in response to an alarm confirmation message received from the missile warning system (2) and confirming that a potential approaching infrared-guided missile is an actual approaching infrared-guided missile, operating also the flare deployment/launch apparatus (12) to deploy/launch flares at one or more given times and according to one or more predefined flare deployment/launch sequences, based on the stored DIRCM-flare coordination libraries and the scenario analysis carried out;
• informing the directed infrared countermeasure system (11) of flare deployment/launch, whereby said directed infrared countermeasure system (11) disregards flares' glares during tracking thereby keeping tracking and jamming the actual approaching infrared-guided missile; and,
• for a predefined blanking period after flare deployment/launch, keeping carrying out the scenario analysis only based on tracking update messages received from the directed infrared countermeasure system (11) and related to the actual approaching infrared-guided missile tracked and jammed by said directed infrared countermeasure system (11), while disregarding messages received from the missile warning system (2) and related to one or more infrared-guided missiles detected by said missile warning system (2) in a given space sector where the actual approaching infrared-guided missile is located;
wherein the self-protection suite manager (114) determines the one or more given times based on the one or more stored DIRCM-flare coordination libraries ;
and wherein the one or more predefined flare deployment/launch sequences the predefined blanking period and the given space sector are indicated in the stored DIRCM-flare coordination libraries .

5. The method of claim 4, wherein the directed infrared countermeasure system includes a plurality of directed infrared countermeasure steerable turrets, each operable to track and jam infrared-guided missiles in a respective coverage region; and wherein the method comprises coordinating, by means of the self-protection suite manager (114), operation of said directed infrared countermeasure steerable turrets.

6. Computer program product comprising instructions to cause the device of any of claims 1-3 to execute the steps of the method of any of claims 4-5.

7. Land platform or vehicle equipped with the infrared countermeasure system (1) as claimed in any claim 1-3.

8. Avionic platform (A) equipped with the infrared countermeasure system (1) as claimed in any claim 1-3.

9. Naval unit equipped with the infrared countermeasure system (1) as claimed in any claim 1-3.

## Patentansprüche

1. Infrarot-Gegenmaßnahmensystem (1), das dazu ausgelegt ist, auf einer Plattform (A) zum Schutz gegen infrarotgesteuerte Flugkörper installiert und mit einem auf der Plattform (A) installierten Flugkörperwarnsystem (2) verbunden zu werden, wobei das Flugkörperwarnsystem (2) dazu konfiguriert ist, sich nähernde infrarotgesteuerte Flugkörper zu erkennen; wobei das Infrarot-Gegenmaßnahmensystem (1) ein gerichtetes Infrarot-Gegenmaßnahmensystem (11), eine Leuchtraketen-Einsatz-/Abschussvorrichtung (12) und einen Selbstschutzsuite-Manager (114) umfasst;
wobei das gerichtete Infrarot-Gegenmaßnahmensystem (11) betreibbar ist, um sich nähernde infrarotgesteuerte Flugkörper zu verfolgen und zu stören, die Leuchtraketen-Einsatz-/Abschussvorrichtung (12) betreibbar ist, um Leuchtraketen einzusetzen/abzuschießen, und der Selbstschutzsuite-Manager (114) konfiguriert ist:
- zum Betreiben
- des gerichteten Infrarot-Gegenmaßnahmensystems (11), um sich nähernde infrarotgesteuerte Flugkörper, die vom Flugkörperwarnsystem (2) erkannt werden, zu verfolgen und zu stören, und
- der Leuchtraketen-Einsatz-/Abschussvorrichtung (12), um Leuchtraketen einzusetzen/abzuschießen;
- zum Empfangen von Nachrichten von dem Flugkörperwarnsystem (2), die sich auf infrarotgesteuerte Flugkörper beziehen, die von dem Flugkörperwarnsystem (2) erkannt werden, wobei die Nachrichten, die sich auf erkannte infrarotgesteuerte Flugkörper beziehen, umfassen:
- Voralarmnachrichten, die sich potentiell nähernde infrarotgesteuerte Flugkörper signalisieren,
- Voralarmaktualisierungsnachrichten, die Aktualisierungen über sich potenziell nähernde infrarotgesteuerte Flugkörper anzeigen, die zuvor signalisiert wurden,
- Alarmbestätigungsnachrichten, die sich tatsächlich nähernde infrarotgesteuerte Flugkörper bestätigen, und
- Alarmaktualisierungsnachrichten, die Aktualisierungen über sich tatsächlich nähernde infrarotgesteuerte Flugkörper anzeigen;
- zum Empfangen von Verfolgungsaktualisierungsnachrichten von dem gerichteten Infrarot-Gegenmaßnahmensystem (11), die Aktualisierungen über sich nähernde infrarotgesteuerte Flugkörper anzeigen, die von dem gerichteten Infrarot-Gegenmaßnahmensystem (11) verfolgt und gestört werden;
- zum Betreiben des gerichteten Infrarot-Gegenmaßnahmensystems (11) als Reaktion auf eine Voralarmnachricht, die von dem Flugkörperwarnsystem (2) empfangen wird und einen sich potenziell nähernden infrarotgesteuerten Flugkörper anzeigt, um den sich potenziell nähernden infrarotgesteuerten Flugkörper zu verfolgen und zu stören; und
- zum Ausführen einer Szenario-Analyse basierend auf
- der Voralarmnachricht und den Voralarmaktualisierungsnachrichten, die von dem Flugkörperwarnsystem (2) empfangen werden und sich auf den sich potenziell nähernden infrarotgesteuerten Flugkörper beziehen, und
- Verfolgungsaktualisierungsnachrichten, die von dem gerichteten Infrarot-Gegenmaßnahmensystem (11) empfangen werden und sich auf den sich potenziell nähernden infrarotgesteuerten Flugkörper beziehen, der von dem gerichteten Infrarot-Gegenmaßnahmensystem (11) verfolgt und gestört wird;
**dadurch gekennzeichnet, dass** der Selbstschutzsuite-Manager (114) ferner dazu konfiguriert ist:
- eine oder mehrere DIRCM-Leuchtraketen-Koordinationsbibliotheken zu speichern, die eine vordefinierte Politik der Koordination von Leuchtraketen-Einsatz/-Abschuss mit Betrieb des gerichteten Infrarot-Gegenmaßnahmensystems (11) anzeigen;
- als Reaktion auf eine Alarmbestätigungsnachricht, die von dem Flugkörperwarnsystem (2) empfangen wird und bestätigt, dass ein sich potenziell nähernder infrarotgesteuerter Flugkörper ein sich tatsächlich nährender infrarotgesteuerter Flugkörper ist, auch die Leuchtraketen-Einsatz-/Abschussvorrichtung (12) zu betreiben, um Leuchtraketen zu einem oder mehreren gegebenen Zeitpunkten und gemäß einer oder mehreren vordefinierten Leuchtraketen-Einsatz-/Abschusssequenzen basierend auf der einen oder den mehreren gespeicherten DIRCM-Leuchtraketen-Koordinationsbibliotheken und der ausgeführten Szenario-Analyse einzusetzen/abzuschießen;
- das gerichtete Infrarot-Gegenmaßnahmensystem (11) über den Einsatz/Abschuss von Leuchtraketen zu informieren, wobei das gerichtete Infrarot-Gegenmaßnahmensystem (11) blendendes Licht der Leuchtraketen während der Verfolgung außer Acht lässt, wodurch es den sich tatsächlich nähernden infrarotgesteuerten Flugkörper weiter verfolgt und stört; und,
- für eine vordefinierte Ausblendungsperiode nach dem Einsatz/Abschuss der Leuchtrakete die Szenario-Analyse nur basierend auf Verfolgungsaktualisierungsnachrichten weiter auszuführen, die von dem gerichteten Infrarot-Gegenmaßnahmensystem (11) empfangen werden und sich auf den sich tatsächlich nähernden infrarotgesteuerten Flugkörper beziehen, der von dem gerichteten Infrarot-Gegenmaßnahmensystem (11) verfolgt und gestört werde, während Nachrichten außer Acht gelassen werden, die von dem Flugkörperwarnsystem (2) empfangen werden und sich auf einen oder mehrere infrarotgesteuerte Flugkörper beziehen, die von dem Flugkörperwarnsystem (2) in einem gegebenen Raumsektor, in dem sich der tatsächlich nähernde infrarotgesteuerte Flugkörper befindet, erkannt werden;
wobei der Selbstschutzsuite-Manager (114) dazu konfiguriert ist, den einen oder die mehreren gegebenen Zeitpunkte basierend auf den gespeicherten DIRCM-Leuchtraketen-Koordinationsbibliotheken zu bestimmen;
und wobei die eine oder die mehreren vordefinierten Leuchtraketen-Einsatz-/Abschusssequenzen, die vordefinierte Ausblendungsperiode und der gegebene Raumsektor in einer oder den mehreren gespeicherten DIRCM-Leuchtraketen-Koordinationsbibliotheken angezeigt werden.

2. Infrarot-Gegenmaßnahmensystem nach Anspruch 1, wobei das gerichtete Infrarot-Gegenmaßnahmensystem eine Vielzahl von lenkbaren Türmen für gerichtete Infrarot-Gegenmaßnahmen umfasst, von denen jeder betreibbar ist, infrarotgesteuerte Flugkörper in einem jeweiligen Abdeckungsbereich zu verfolgen und zu stören; und wobei der Selbstschutzsuite-Manager (114) dazu konfiguriert ist, den Betrieb der lenkbaren Türme für gerichtete Infrarot-Gegenmaßnahmen zu koordinieren.

3. Infrarot-Gegenmaßnahmensystem nach Anspruch 1 oder 2, umfassend eine Vielzahl von Leuchtraketen-Einsatz-/Abschussvorrichtungen.

4. Verfahren zum Betrieb eines Infrarot-Gegenmaßnahmensystems (1), das auf einer Plattform (A) zum Schutz gegen infrarotgesteuerte Flugkörper installiert ist, wobei das Infrarot-Gegenmaßnahmensystem (1) mit einem Flugkörperwarnsystem (2) verbunden ist, das auf der Plattform (A) installiert und dazu konfiguriert ist, sich nähernde infrarotgesteuerte Flugkörper zu erkennen; wobei das Infrarot-Gegenmaßnahmensystem (1) umfasst:
- ein gerichtetes Infrarot-Gegenmaßnahmensystem (11), das betreibbar ist, sich nähernde infrarotgesteuerte Flugkörper zu verfolgen und zu stören;
- eine Leuchtraketen-Einsatz-/Abschussvorrichtung (12), die betreibbar ist, Leuchtraketen einzusetzen/abzuschießen; und
- einen Selbstschutzsuite-Manager (114);
wobei das Verfahren das Ausführen der folgenden Betriebsschritte mittels des Selbstschutzsuite-Managers (114) umfasst:
- Betreiben
- des gerichteten Infrarot-Gegenmaßnahmensystems (11), um sich nähernde infrarotgesteuerte Flugkörper, die von dem Flugkörperwarnsystem (2) erkannt werden, zu verfolgen und zu stören, und
- der Leuchtraketen-Einsatz-/Abschussvorrichtung (12), um Leuchtraketen einzusetzen/abzuschießen;
- Empfangen von Nachrichten von dem Flugkörperwarnsystem (2), die sich auf infrarotgesteuerte Flugkörper beziehen, die von dem Flugkörperwarnsystem (2) erkannt werden, wobei die Nachrichten, die sich auf erkannte infrarotgesteuerte Flugkörper beziehen, umfassen:
- Voralarmnachrichten, die sich potentiell nähernde infrarotgesteuerte Flugkörper signalisieren,
- Voralarmaktualisierungsnachrichten, die Aktualisierungen über sich potenziell nähernde infrarotgesteuerte Flugkörper anzeigen, die zuvor signalisiert wurden,
- Alarmbestätigungsnachrichten, die sich tatsächlich nähernde infrarotgesteuerte Flugkörper bestätigen, und
- Alarmaktualisierungsnachrichten, die Aktualisierungen über sich tatsächlich nähernde infrarotgesteuerte Flugkörper anzeigen;
- Empfangen von Verfolgungsaktualisierungsnachrichten von dem gerichteten Infrarot-Gegenmaßnahmensystem (11), die Aktualisierungen über sich nähernde infrarotgesteuerte Flugkörper anzeigen, die von dem gerichteten Infrarot-Gegenmaßnahmensystem (11) verfolgt und gestört werden;
- Betreiben des gerichteten Infrarot-Gegenmaßnahmensystems (11) als Reaktion auf eine Voralarmnachricht, die von dem Flugkörperwarnsystem (2) empfangen wird und einen sich potenziell nähernden infrarotgesteuerten Flugkörper anzeigt, um den sich potenziell nähernden infrarotgesteuerten Flugkörper zu verfolgen und zu stören; und
- Ausführen einer Szenario-Analyse basierend auf
- der Voralarmnachricht und den Voralarmaktualisierungsnachrichten, die von dem Flugkörperwarnsystem (2) empfangen werden und sich auf den sich potenziell nähernden infrarotgesteuerten Flugkörper beziehen, und
- Verfolgungsaktualisierungsnachrichten, die von dem gerichteten Infrarot-Gegenmaßnahmensystem (11) empfangen werden und sich auf den sich potenziell nähernden infrarotgesteuerten Flugkörper beziehen, der von dem gerichteten Infrarot-Gegenmaßnahmensystem (11) verfolgt und gestört wird;
**dadurch gekennzeichnet, dass** der Selbstschutzsuite-Manager (114) eine oder mehrere DIRCM-Leuchtraketen-Koordinationsbibliotheken speichert, die eine vordefinierte Politik der Koordination von Leuchtraketen-Einsatz/-Abschuss mit Betrieb des gerichteten Infrarot-Gegenmaßnahmensystems (11) anzeigen;
wobei das Verfahren ferner das Ausführen auch der folgenden Betriebsschritte mittels des Selbstschutzsuite-Managers (114) umfasst:
- Betreiben auch der Leuchtraketen-Einsatz-/Abschussvorrichtung (12) als Reaktion auf eine Alarmbestätigungsnachricht, die von dem Flugkörperwarnsystem (2) empfangen wird und bestätigt, dass ein sich potenziell nähernder infrarotgesteuerter Flugkörper ein sich tatsächlich nähernder infrarotgesteuerter Flugkörper ist, um Leuchtraketen zu einem oder mehreren gegebenen Zeitpunkten und gemäß einer oder mehreren vordefinierten Leuchtraketen-Einsatz-/Abschusssequenzen basierend auf den gespeicherten DIRCM-Leuchtraketen-Koordinationsbibliotheken und der ausgeführten Szenario-Analyse einzusetzen/abzuschießen;
- Informieren des gerichteten Infrarot-Gegenmaßnahmensystems (11) über den Einsatz/Abschuss von Leuchtraketen, wobei das gerichtete Infrarot-Gegenmaßnahmensystem (11) blendendes Licht der Leuchtraketen während der Verfolgung außer Acht lässt, wodurch es den sich tatsächlich nähernden infrarotgesteuerten Flugkörper weiter verfolgt und stört; und,
- weiteres Ausführen der Szenario-Analyse für eine vordefinierte Ausblendungsperiode nach Einsatz/Abschuss der Leuchtrakete nur basierend auf Verfolgungsaktualisierungsnachrichten, die von dem gerichteten Infrarot-Gegenmaßnahmensystem (11) empfangen werden und sich auf den sich tatsächlich nähernden infrarotgesteuerten Flugkörper beziehen, der von dem gerichteten Infrarot-Gegenmaßnahmensystem (11) verfolgt und gestört wird, während Nachrichten außer Acht gelassen werden, die von dem Flugkörperwarnsystem (2) empfangen werden und sich auf einen oder mehrere infrarotgesteuerte Flugkörper beziehen, die von dem Flugkörperwarnsystem (2) in einem gegebenen Raumsektor erkannt werden, in dem sich der sich tatsächlich nähernde infrarotgesteuerte Flugkörper befindet;
wobei der Selbstschutzsuite-Manager (114) die eine oder die mehreren gegebenen Zeitpunkte basierend auf der einen oder den mehreren gespeicherten DIRCM-Leuchtraketen-Koordinationsbibliotheken bestimmt;
und wobei die eine oder die mehreren vordefinierten Leuchtraketen-Einsatz-/Abschusssequenzen, die vordefinierte Ausblendungsperiode und der gegebene Raumsektor in den gespeicherten DIRCM-Leuchtraketen-Koordinationsbibliotheken angezeigt werden.

5. Verfahren nach Anspruch 4, wobei das gerichtete Infrarot-Gegenmaßnahmensystem eine Vielzahl von lenkbaren Türmen für gerichtete Infrarot-Gegenmaßnahmen umfasst, von denen jeder betreibbar ist, infrarotgesteuerte Flugkörper in einem jeweiligen Abdeckungsbereich zu verfolgen und zu stören; und wobei das Verfahren die Koordinierung des Betriebs der lenkbaren Türme für gerichtete Infrarot-Gegenmaßnahmen mittels des Selbstschutzsuite-Managers (114) umfasst.

6. Computerprogrammprodukt, umfassend Anweisungen, die das Gerät nach einem der Ansprüche 1-3 veranlassen, die Schritte des Verfahrens nach einem der Ansprüche 4-5 auszuführen.

7. Landplattform oder Fahrzeug, die oder das mit dem Infrarot-Gegenmaßnahmensystem (1) nach einem der Ansprüche 1-3 ausgestattet ist.

8. Avionikplattform (A), die mit dem Infrarot-Gegenmaßnahmensystem (1) nach einem der Ansprüche 1-3 ausgestattet ist.

9. Marineeinheit, die mit dem Infrarot-Gegenmaßnahmensystem (1) nach einem der Ansprüche 1-3 ausgestattet ist.

## Revendications

1. Système de contre-mesure infrarouge (1) conçu pour être installé sur une plateforme (A) en vue d'une protection contre des missiles guidés par infrarouge et pour être relié à un système d'avertissement de missile (2) installé sur ladite plateforme (A), dans lequel ledit système d'avertissement de missile (2) est configuré pour détecter des missiles guidés par infrarouge en approche ; ledit système de contre-mesure infrarouge (1) comprenant un système de contre-mesure infrarouge dirigée (11), un appareil de déploiement/lancement de fusée lumineuse (12) et une suite de gestion d'autoprotection (114) ;
dans lequel le système de contre-mesure infrarouge dirigée (11) sert à suivre et brouiller des missiles guidés par infrarouge en approche, l'appareil de déploiement/lancement de fusée lumineuse (12) sert à déployer/lancer des fusées lumineuses et la suite de gestion d'autoprotection (114) est configurée pour :
• faire fonctionner
- le système de contre-mesure infrarouge dirigée (11) pour suivre et brouiller des missiles guidés par infrarouge en approche détectés par le système d'avertissement de missile (2) et
- l'appareil de déploiement/lancement de fusée lumineuse (12) pour déployer/lancer des fusées lumineuses ;
• recevoir, en provenance du système d'avertissement de missile (2), des messages liés à des missiles guidés par infrarouge détectés par ledit système d'avertissement de missile (2), dans lequel lesdits messages liés à des missiles guidés par infrarouge détectés incluent
- des messages de pré-alarme signalant de potentiels missiles guidés par infrarouge en approche,
- des messages de mise à jour de pré-alarme indicatifs de mises à jour concernant des potentiels missiles guidés par infrarouge en approche préalablement signalés,
- des messages de confirmation d'alarme confirmant de réels missiles guidés par infrarouge en approche, et
- des messages de mise à jour d'alarme indicatifs de mises à jour concernant des réels missiles guidés par infrarouge en approche ;
• recevoir, en provenance du système de contre-mesure infrarouge dirigée (11), des messages de mise à jour de suivi indicatifs de mises à jour concernant des missiles guidés par infrarouge en approche suivis et brouillés par ledit système de contre-mesure infrarouge dirigée (11) ;
• en réponse à un message de pré-alarme reçu en provenance du système d'avertissement de missile (2) et indicatif d'un potentiel missile guidé par infrarouge en approche, faire fonctionner le système de contre-mesure infrarouge dirigée (11) pour suivre et brouiller ledit potentiel missile guidé par infrarouge en approche ; et
• réaliser une analyse de scénario sur la base
- du message de pré-alarme et des messages de mise à jour de pré-alarme reçus en provenance du système d'avertissement de missile (2) et liés audit potentiel missile guidé par infrarouge en approche, et
- de messages de mise à jour de suivi reçus en provenance du système de contre-mesure infrarouge dirigée (11) et liés audit potentiel missile guidé par infrarouge en approche suivi et brouillé par ledit système de contre-mesure infrarouge dirigée (11) ;
**caractérisé en ce que** la suite de gestion d'autoprotection (114) est en outre configurée pour :
• stocker une ou plusieurs bibliothèques de coordination de fusée lumineuse de contre-mesure infrarouge dirigée indicatives d'une politique prédéfinie de coordination de déploiement/lancement de fusée lumineuse avec le fonctionnement du système de contre-mesure infrarouge dirigée (11) ;
• en réponse à un message de confirmation d'alarme reçu en provenance du système d'avertissement de missile (2) et confirmant qu'un potentiel missile guidé par infrarouge en approche est un réel missile guidé par infrarouge en approche, faire fonctionner également l'appareil de déploiement/lancement de fusée lumineuse (12) pour déployer/lancer des fusés lumineuses à un ou plusieurs moments donnés et en fonction d'une ou plusieurs séquences de déploiement/lancement de fusée lumineuse prédéfinies, sur la base des une ou plusieurs bibliothèques de coordination de fusée lumineuse de contre-mesure infrarouge dirigée stockées et de l'analyse de scénario réalisée ;
• informer le système de contre-mesure infrarouge dirigée (11) d'un déploiement/lancement de fusée lumineuse, moyennant quoi ledit système de contre-mesure infrarouge dirigée (11) ne tient pas compte des éblouissements des fusées lumineuses durant le suivi, maintenant ainsi le suivi et le brouillage du réel missile guidé par infrarouge en approche ; et,
• pendant une période d'occultation prédéfinie après le déploiement/lancement de fusée lumineuse, continuer à réaliser l'analyse de scénario uniquement sur la base de messages de mise à jour de suivi reçus en provenance du système de contre-mesure infrarouge dirigée (11) et liés au réel missile guidé par infrarouge en approche suivi et brouillé par ledit système de contre-mesure infrarouge dirigée (11), tout en ne tenant pas compte de messages reçus en provenance du système d'avertissement de missile (2) et liés à un ou plusieurs missiles guidés par infrarouge détectés par ledit système d'avertissement de missile (2) dans un secteur d'espace donné où se situe le réel missile guidé par infrarouge en approche ;
dans lequel la suite de gestion d'autoprotection (114) est configurée pour déterminer les un ou plusieurs moments donnés sur la base des bibliothèques de coordination de fusée lumineuse de contre-mesure infrarouge dirigée stockées ;
et dans lequel les une ou plusieurs séquences de déploiement/lancement de fusée lumineuse prédéfinies, la période d'occultation prédéfinie et le secteur d'espace donné sont indiqués dans les une ou plusieurs bibliothèques de coordination de fusée lumineuse de contre-mesure infrarouge dirigée stockées.

2. Système de contre-mesure infrarouge selon la revendication 1, dans lequel le système de contre-mesure infrarouge dirigée inclut une pluralité de tourelles orientables de contre-mesure infrarouge dirigée, chacune servant à suivre et brouiller des missiles guidés par infrarouge dans une région de couverture respective ; et dans lequel la suite de gestion d'autoprotection (114) est configurée pour coordonner le fonctionnement desdites tourelles orientables de contre-mesure infrarouge dirigée.

3. Système de contre-mesure infrarouge selon la revendication 1 ou 2, comprenant une pluralité d'appareils de déploiement/lancement de fusée lumineuse.

4. Procédé de fonctionnement d'un système de contre-mesure infrarouge (1) installé sur une plateforme (A) en vue d'une protection contre des missiles guidés par infrarouge, dans lequel ledit système de contre-mesure infrarouge (1) est relié à un système d'avertissement de missile (2) qui est installé sur la plateforme (A) et qui est configuré pour détecter des missiles guidés par infrarouge en approche ; ledit système de contre-mesure infrarouge (1) comprenant :
• un système de contre-mesure infrarouge dirigée (11) servant à suivre et brouiller des missiles guidés par infrarouge en approche ;
• un appareil de déploiement/lancement de fusée lumineuse (12) servant à déployer/lancer des fusées lumineuses ; et
• une suite de gestion d'autoprotection (114) ; le procédé comprenant la réalisation des opérations suivantes à l'aide de la suite de gestion d'autoprotection (114) :
• le fonctionnement
- du système de contre-mesure infrarouge dirigée (11) pour suivre et brouiller des missiles guidés par infrarouge en approche détectés par le système d'avertissement de missile (2) et
- de l'appareil de déploiement/lancement de fusée lumineuse (12) pour déployer/lancer des fusées lumineuses ;
• la réception, en provenance du système d'avertissement de missile (2), de messages liés à des missiles guidés par infrarouge détectés par ledit système d'avertissement de missile (2), dans lequel lesdits messages liés à des missiles guidés par infrarouge détectés incluent
- des messages de pré-alarme signalant de potentiels missiles guidés par infrarouge en approche,
- des messages de mise à jour de pré-alarme indicatifs de mises à jour concernant des potentiels missiles guidés par infrarouge en approche préalablement signalés,
- des messages de confirmation d'alarme confirmant de réels missiles guidés par infrarouge en approche, et
- des messages de mise à jour d'alarme indicatifs de mises à jour concernant des réels missiles guidés par infrarouge en approche ;
• la réception, en provenance du système de contre-mesure infrarouge dirigée (11), de messages de mise à jour de suivi indicatifs de mises à jour concernant des missiles guidés par infrarouge en approche suivis et brouillés par ledit système de contre-mesure infrarouge dirigée (11) ;
• en réponse à un message de pré-alarme reçu en provenance du système d'avertissement de missile (2) et indicatif d'un potentiel missile guidé par infrarouge en approche, le fonctionnement du système de contre-mesure infrarouge dirigée (11) pour suivre et brouiller ledit potentiel missile guidé par infrarouge en approche ; et
• la réalisation d'une analyse de scénario sur la base
- du message de pré-alarme et des messages de mise à jour de pré-alarme reçus en provenance du système d'avertissement de missile (2) et liés audit potentiel missile guidé par infrarouge en approche, et
- de messages de mise à jour de suivi reçus en provenance du système de contre-mesure infrarouge dirigée (11) et liés audit potentiel missile guidé par infrarouge en approche suivi et brouillé par ledit système de contre-mesure infrarouge dirigée (11) ;
**caractérisé en ce que** ladite suite de gestion d'autoprotection (114) stocke une ou plusieurs bibliothèques de coordination de fusée lumineuse de contre-mesure infrarouge dirigée indicatives d'une politique prédéfinie de coordination de déploiement/lancement de fusée lumineuse avec le fonctionnement du système de contre-mesure infrarouge dirigée (11) ;
dans lequel le procédé comprend en outre la réalisation également des opérations suivantes à l'aide de la suite de gestion d'autoprotection (114) :
• en réponse à un message de confirmation d'alarme reçu en provenance du système d'avertissement de missile (2) et confirmant qu'un potentiel missile guidé par infrarouge en approche est un réel missile guidé par infrarouge en approche, le fonctionnement également de l'appareil de déploiement/lancement de fusée lumineuse (12) pour déployer/lancer des fusés lumineuses à un ou plusieurs moments donnés et en fonction d'une ou plusieurs séquences de déploiement/lancement de fusée lumineuse prédéfinies, sur la base des bibliothèques de coordination de fusée lumineuse de contre-mesure infrarouge dirigée stockées et de l'analyse de scénario réalisée ;
• le fait d'informer le système de contre-mesure infrarouge dirigée (11) d'un déploiement/lancement de fusée lumineuse, moyennant quoi ledit système de contre-mesure infrarouge dirigée (11) ne tient pas compte des éblouissements des fusées lumineuses durant le suivi, maintenant ainsi le suivi et le brouillage du réel missile guidé par infrarouge en approche ; et,
• pendant une période d'occultation prédéfinie après le déploiement/lancement de fusée lumineuse, la poursuite de la réalisation de l'analyse de scénario uniquement sur la base de messages de mise à jour de suivi reçus en provenance du système de contre-mesure infrarouge dirigée (11) et liés au réel missile guidé par infrarouge en approche suivi et brouillé par ledit système de contre-mesure infrarouge dirigée (11), tout en ne tenant pas compte de messages reçus en provenance du système d'avertissement de missile (2) et liés à un ou plusieurs missiles guidés par infrarouge détectés par ledit système d'avertissement de missile (2) dans un secteur d'espace donné où se situe le réel missile guidé par infrarouge en approche ;
dans lequel la suite de gestion d'autoprotection (114) détermine les un ou plusieurs moments donnés sur la base des une ou plusieurs bibliothèques de coordination de fusée lumineuse de contre-mesure infrarouge dirigée stockées ;
et dans lequel les une ou plusieurs séquences de déploiement/lancement de fusée lumineuse prédéfinies, la période d'occultation prédéfinie et le secteur d'espace donné sont indiqués dans les une ou plusieurs bibliothèques de coordination de fusée lumineuse de contre-mesure infrarouge dirigée stockées.

5. Procédé selon la revendication 4, dans lequel le système de contre-mesure infrarouge dirigée inclut une pluralité de tourelles orientables de contre-mesure infrarouge dirigée, chacune servant à suivre et brouiller des missiles guidés par infrarouge dans une région de couverture respective ; et dans lequel le procédé comprend la coordination, à l'aide de la suite de gestion d'autoprotection (114), du fonctionnement desdites tourelles orientables de contre-mesure infrarouge dirigée.

6. Produit-programme informatique comprenant des instructions pour amener le dispositif selon l'une quelconque des revendications 1-3 à exécuter les étapes du procédé selon l'une quelconque des revendications 4-5.

7. Plateforme terrestre ou véhicule équipé du système de contre-mesure infrarouge (1) selon l'une quelconque des revendications 1-3.

8. Plateforme avionique (A) équipée du système de contre-mesure infrarouge (1) selon l'une quelconque des revendications 1-3.

9. Unité navale équipée du système de contre-mesure infrarouge (1) selon l'une quelconque des revendications 1-3.
